(19) Europäisches Patentamt

European Patent Office

Office européen des brevets

(11) **EP 1 091 476 A2**

(12) **EUROPEAN PATENT APPLICATION**

(43) Date of publication:
**11.04.2001 Bulletin 2001/15**

(51) Int. Cl.[7]: **H02K 21/22**

(21) Application number: **00116608.1**

(22) Date of filing: **01.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.10.1999 JP 28844999**

(71) Applicant:
**Moriyama Kogyo Kabushiki Kaisha Shizuoka-ken (JP)**

(72) Inventor:
**Morimatsu, Masaki,
c/o Moriyama Kogyo K. K.
Shuuchi-gun, Shizuoka-ken (JP)**

(74) Representative:
**Leson, Thomas Johannes Alois, Dipl.-Ing. et al
Patentanwälte
Tiedtke-Bühling-Kinne & Partner,
Bavariaring 4
80336 München (DE)**

(54) **Three-phase magneto generator**

(57)    A three-phase magnetogenerator driven with an internal combustion engine for enabling to reduce the size of a driving engine by reducing driving torque, to improve generation efficiency by smoothing output voltage waveform, to reduce the size or increase the output of the generator by making coils compact by reducing the amount of self-generation, and to reduce size and cost of a smoothing capacitor by reducing peak voltage.

The number of teeth widing generation coils is set as 3m (m being a positive integer) and the number of poles of a permanent magnet secured to a rotor is set as 2n (n being a positive integer), so that 2n/m is not an integer. It is arranged that voltages induced at a plural number of teeth constituting the same phase voltages are of the same polarity and in displaced phases. A neodymium-iron-boron magnet is preferable for the permanent magnet secured to the rotor. When the number of teeth is 3m, the coils of the same phase are wound in succession about m teeth located in succession in the stator circumference direction with their winding direction being reversed alternately to correspond to changes in the polarities of the permanent magnet, so that the polarities of the voltages induced in respective coils are the same each other.

FIG. 2

$2n = 16$
$3m = 15$

$24° = \theta_2$
$22.5° = \theta_1$
15 teeth
Magnet of 16 poles
$\Delta\theta$
$1.5°$

16
Coil (U-phase)
16
10
14
24
$3°$
$4.5°$
12
20
24
52
52
22

$\Theta = \Delta\theta \cdot (m-1)$
$(< \theta_1/2)$

EP 1 091 476 A2

## Description

Field of the Invention

This invention relates to a three-phase magnetogenerator driven with an internal combustion engine.

Prior Art

A magnetogenerator is known in which a rotor fixing permanent magnets is rotated with an internal combustion engine to induce voltages in stator coils as rotating magnetic field intersects the stator coils. In that case, the number of magnetic poles of the permanent magnets disposed in the rotating direction (circumferential direction) of the rotor is 2n (n being a positive integer) because the same number of N-poles and S-poles must be located at equal intervals in the circumferential direction- In a three-phase generator, the number of teeth P of the stator core is 3m (m being a positive integer).

Conventionally, it is arranged that n = m . That is to say, when the number of magnetic poles M of the rotor is arranged as 2n, the number of teeth P of the stator core is set to 3m = 3n . For example, when n = 6, the number of magnetic poles M is set to 12 and the number of teeth P is 18. When n = 8, those numbers are defined as M = 16, and P = 24.

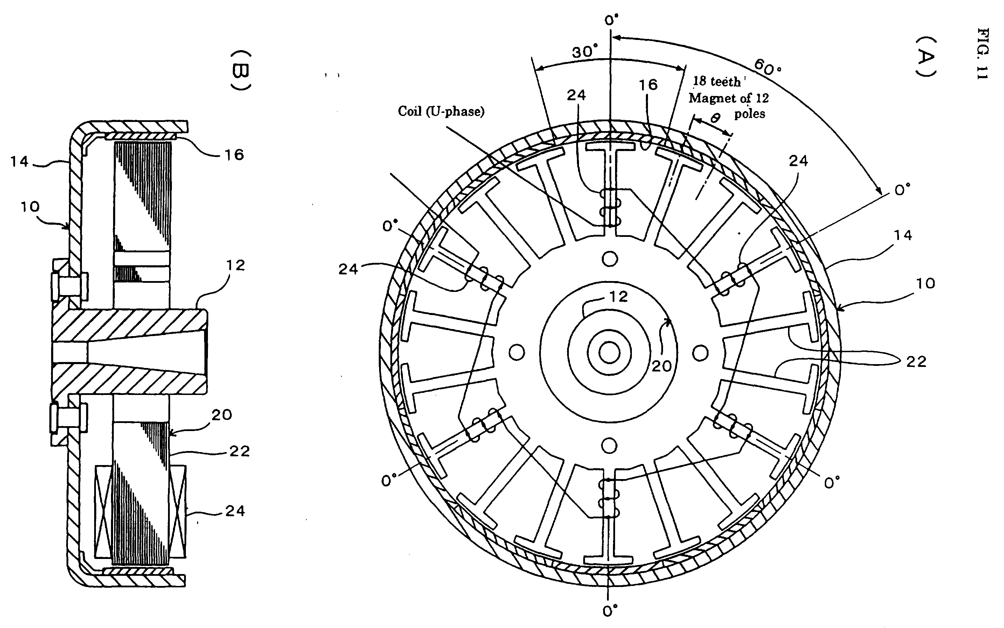

FIG. 11 shows a partially cross sectioned front view (A) and its cross section (B) of the constitution of a conventional magnetogenerator, with n = m = 6 , or M = 12 and P= 18. In FIG. 11 is shown a rotor 10 comprising a boss portion 12 secured to a crankshaft (not shown) of an engine, a generally cup-shaped cup portion 14 secured to the flange of the boss portion 12, and an annular permanent magnet 16 secured to the inside circumferential surface of the cup portion 14. The permanent magnet 16 is magnetized to have 2n poles in opposite polarities by turns in the circumferential direction. This conventional example is arranged as n = 6, and the number of magnetic poles M is 2n = 12.

A stator 20 comprises a stator core made by laminating thin steel plates having teeth (magnetic poles) 22 on which coils 24 are wound. The number of teeth 22 of the stator 20 is 18. In this case, m = 6 because $3 \times m = 18$. The coils 24 have U-, V-, and W-phases. The coil of each phase is wound on every three teeth 22 in succession. In this case, the every three teeth on which the coils 24 of the same phase are wound oppose the same polarity of the magnet 16 at the same electrical angle. In order to arrange that the teeth of the same phase oppose the same polarity of the magnet 16 at the same electrical angle as described above, it is necessary that either n = m or at least n is an integer multiple of m.

Problems to be Solved by the Invention

With the conventional generator as described above, since electricity is generated in the state of that the m (six) teeth 22 wound on the coils 24 having same place are opposed to the m (six) permanent magnets in the same phase, harmonics induced at the respective m (six) teeth are superimposed in the same phase, and distortion in the output waveform is intensified. As a result, driving torque of the rotor 10 increases for a certain output to be produced.

In recent years on the other hand, performance of the permanent magnet has been improved and the neodymium-iron-boron magnet having a high maximum magnetic energy product has come to be known. When such a high performance magnet is used, variation in the driving torque for the rotor also increases. With the increase in the driving torque, when the rotor is driven with an internal combustion engine, variation in the load on the engine also increases. This in particular necessitates increase the of the driving power or output of the engine. In the case the generator is driven with the engine, this means that the size of the engine increases. Moreover, since the coils of respective phases are connected in series at the same electrical angle, generated voltage is increased, but the output voltage waveform is not smooth and includes many harmonics, resulting in a low generation efficiency.

This has resulted in problems that self-heat generation of the generator gets longer, and the amount of generated electricity cannot be increased without increasing the size of the generator. Moreover, the output voltage waveforms in respective phases are heavily disturbed and include many sharp spike-shaped waveforms with high peak voltages. This has necessitated a capacitor for smoothing the output voltage to have a high withstand voltage, which in turn has resulted in a large size and a high cost of the capacitor. Such problems become particularly remarkable when the neodymium -iron- boron magnet is used.

This invention has been made in view of the above-described situation and its object is to provide a three-phase magnetic generator that makes it possible to reduce the size of the driving engine by reducing the driving torque, to improve generation efficiency by smoothing the output voltage waveform, to reduce the size of coils or to produce a high output by making the coils compact by reducing the amount of self-generated electricity, and to reduce the size and cost of the smoothing capacitor by reducing the peak voltage.

Constitution of the Invention

According to the invention, the object is accomplished with a three-phase magnetogenerator driven with an internal combustion engine, characterized in that the number of teeth winding generating coils are set as 3m (m being a positive integer), and the number of magnetic poles of a permanent magnet secured to a rotor are set as 2n (n being a positive integer), so that 2n/m is not an integer, and that voltages induced at a plural number of teeth constituting the same phase voltage are of the same polarity and in displaced phases.

When the permanent magnet secured to the rotor is the neodymium-iron-boron magnet, the effect of the invention is specially remarkable. When the number of teeth is 3m, the coils of the same phase may be wound in succession about m teeth located in succession in the stator circumference direction with their winding direction being reversed to correspond to changes in the polarities of the permanent magnet, so that the polarities of the voltages induced in respective coils are the same each other.

In that case, it is preferable that $|2\pi/2n - 2\pi/3m| \times (m-1)$ does not exceed $\pi/2n$. Here, $2\pi/2n$ is the angle between centers of adjacent permanent magnet poles about their center (hereinafter simply referred to as the permanent magnet angle or pitch angle) $\theta_1$, and $2\pi/3m$ is the angle between centers of adjacent teeth about their center (hereinafter simply referred to as the angle between teeth or pitch angle) $\theta_2$. The phase difference between the permanent magnet and the teeth produced by the succession of m teeth is $|\theta_1 - \theta_2| \times (m-1) = \Theta$. Therefore, when the condition under which the phase difference $\Theta$ is within the width of the permanent magnet is assumed that the phase difference $\Theta$ falls within a half of the permanent magnet angle ($2\pi/2n$), then $\Theta < \pi/2n = \theta_1/2$.

In the case the number of teeth is odd, it is necessary that m teeth on which the same phase coils are wound are in succession in the circumferential direction. In the case the number of teeth is even, the teeth may be divided into two sets, with each set comprising m/2 teeth in the same phase. In the case the number of teeth of 3m in the same phase is a multiple of 9 ($9 \times s$, where s is a positive integer), coils in the same phase may be wound on successive M/s teeth at locations determined by equally dividing the circumference by s.

Brief Description of the Drawings

FIG. 1 shows a cross section of an embodiment of a generator of the invention in the state of being installed in an engine.
FIG. 2 is a front view of the generator.
FIG. 3 is a front view of another embodiment.
FIG. 4 shows output waveform distortion.
FIG. 5 shows phase voltage waveform.
FIG. 6 shows phase voltage waveform.
FIG. 7 shows inter-phase voltage waveform.
FIG. 8 shows inter-phase voltage waveform.

FIG. 9 shows efficiency, etc.
FIG. 10 shows thermal characteristics.
FIG. 11 shows a front and a cross-sectional view of a conventional arrangement.

Embodiments

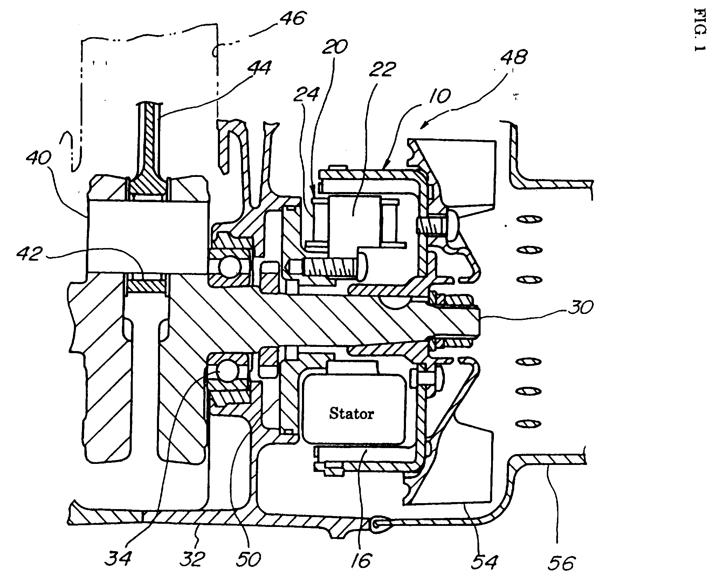

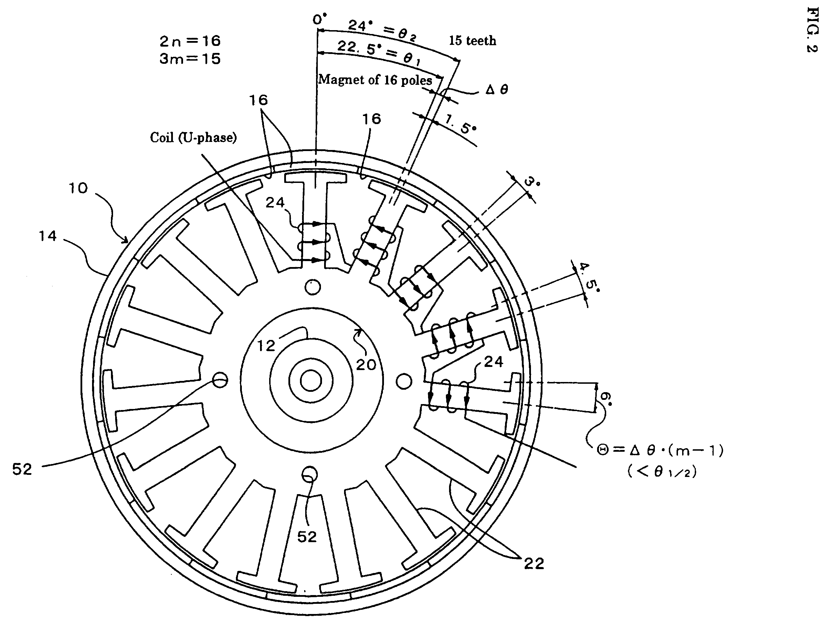

FIG. 1 shows a generator as an embodiment of the invention in the state of being installed in an engine. FIG. 2 is a front view of a portion of the generator. Incidentally in FIG. 2, the parts that are described in reference to FIG. 11 are provided with the same numerical symbols and their detailed descriptions are not repeated. Also, the cross section of FIG. 2 is almost the same as shown in FIG. 11(B).

In FIG. 1, a crankshaft 30 is supported with a right-left split crankcase 32. A bearing 34, together with another bearing (not shown), supports the crankshaft 30. The crankshaft 30 is constituted by joining paired right and left crank webs 36 and 38 together through a crank pin 40. The big end of a connecting rod 44 is supported through a needle bearing 42 on the crank pin 40. The small end of the connecting rod 44 supports a piston (not shown) for sliding up and down within a cylinder 46.

Part of the crankshaft 30 projects from the crankcase 32 so that a three-phase magneticgenerator 48 is mounted thereon. The generator 48 comprises a stator 20 secured to the crankcase 32 and a rotor 10 secured to the crankshaft 30. The stator 20 is secured, using bolts, to a stator holder 50 secured to the crankcase 32. That is, four bolts are inserted into four bolt holes 52 (FIG. 2) bored in a stator core. The boss portion of the rotor 10 is fit over the taper surface of the crankshaft 30 and tightly stopped with a key. A fan 54 is secured to the rotor 10 and covered with a cowling 56. The fan 54 sends cooling air around the cylinder 46 for forced air cooling of the engine.

In this embodiment, a permanent magnet 16 of neodymium-iron-boron having 16 (= 2n) poles and 15 (3m = 15) teeth is used. Therefore, n = 8, and m = 5. In this case, the angle between magnets 16 or the pitch angle $\theta_1$ is $2\pi/2n$ (radian) = 22.5°. The angle between teeth or the pitch angle $\theta_2$ is $2\pi/3m$ (radian) = 24°. Coils of the same phase are wound on successive m (=5) teeth 22. Here, since adjacent teeth 22 are located opposite the magnets 16 of alternately different polarities, the five coils 24 are wound alternately in opposite directions, so that the polarities of voltages induced in respective coils 24 are the same each other.

Along five teeth 22, the teeth 22 is displaced from the magnet 16 by a phase of $\Delta\theta \times (m-1) = \Delta\theta \times 4 = 6°$. In order that the angle 6° remains within the range of the magnet 16, it is arranged that the displacement angle is smaller than a half of the pitch angle $\theta_1$ of the magnet 16, $\Delta\theta \times 4 < \theta_1/2$. As a result, the voltage induced in the coil 24 can be increased sufficiently.

Other Embodiments

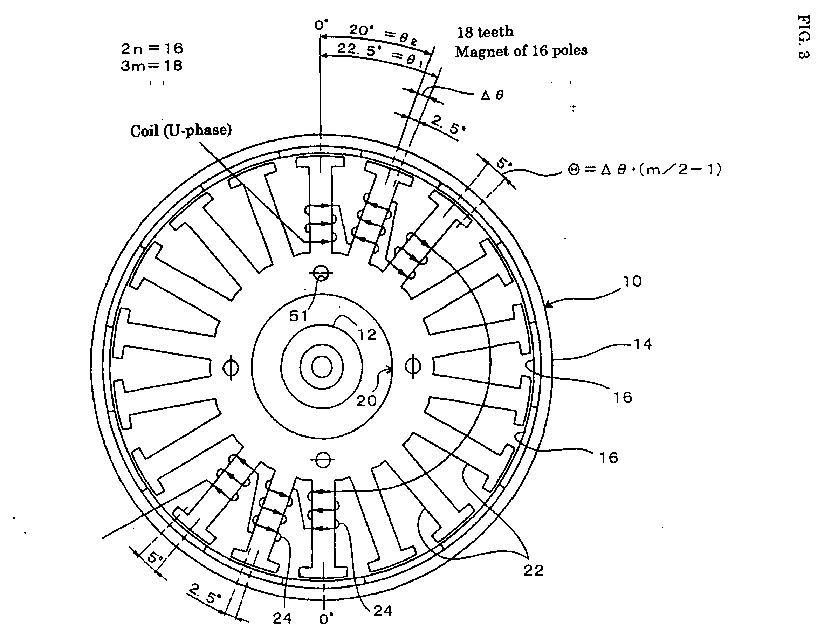

FIG. 3 is a front view of another embodiment of the generator. In FIG. 3, parts that are the same as those in FIG. 11 are provided with the same reference numerals and their descriptions are not repeated.

This embodiment employs a neodymium-iron-boron magnet 16 with 16 ( = 2n) poles, and 18 (= 3m) teeth 22. Therefore, n = 8 and m = 6. In this case, the angle between magnets 16 for the pitch angle $\theta_1$ is $2\pi/2n$ (radian) = 22.5°. The angle between teeth or the pitch angle $\theta_2$ is $2\pi/3m$ (radian) = 20°.

Since the number of teeth 22 is the multiple of two, the coils 24 of the same phase (U-phase in FIG. 3) are divided into two sets. That is, each set consists of three (= m/2) coils 24 wound on successive three teeth 22 and is located symmetrically with respect to the center. Here, since adjacent teeth 22 face the magnets 16 of different polarities, the coils 24 are wound alternately in opposite directions, so that the voltages induced in respective coils 24 do not have opposite directions from one to another. In this embodiment, the displacement angle of three ( = m/2) teeth 22 relative to three magnets 16, or the phase difference $\Theta$ is $\Delta 8 \times (m/2 - 1) = \Delta\theta \cdot 2$. Therefore, it is arranged that $\Theta = \Delta\theta \cdot 2 < \theta_1/2$.

Experimental Example

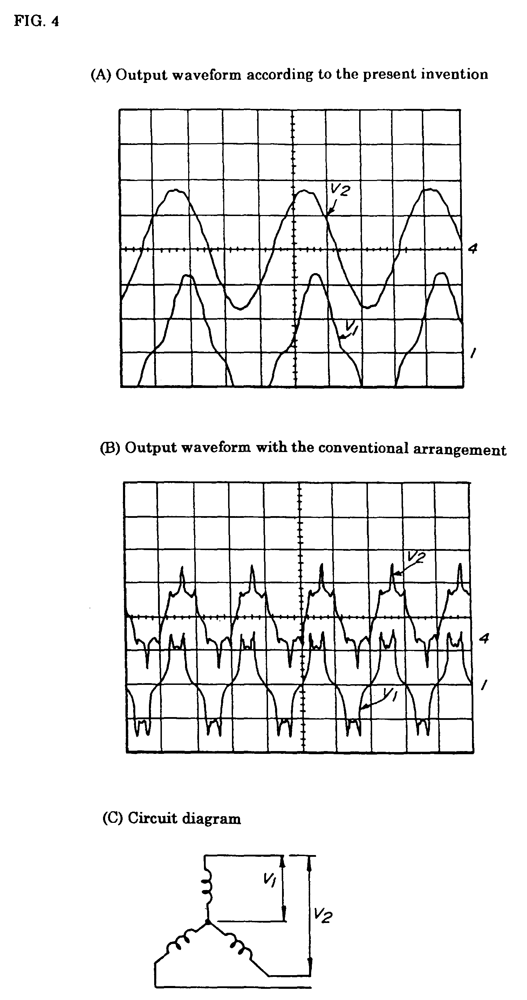

FIG. 4 shows the distortion of the output voltage waveform obtained with an embodiment of the invention in comparison with that obtained with a conventional arrangement. Here, the embodiment of the invention is the one shown in FIG. 3 with 16 poles and 18 teeth, and the conventional arrangement is the one shown in FIG. 11 with 12 poles and 18 teeth.

In FIG. 4, (A) shows phase voltage $V_1$ and inter-phase voltage $V_2$ obtained according to the invention, and (B) shows phase voltage $V_1$ and inter-phase voltage $V_2$ obtained according to the conventional arrangement. FIG. 4 shows a circuit diagram and detecting location of the phase voltage V, and inter-phase voltage $V_2$. As seen from FIG. 4 (B), the output voltage waveforms $V_1$ and $V_2$ of the conventional arrangement include not only large distortion but also many sharp spike-shaped waveforms and many harmonic components. On the other hand, as seen from FIG. 4 (A), the output voltage waveforms $V_1$ and $V_2$ of the invention are smooth and include less distortion and harmonic components.

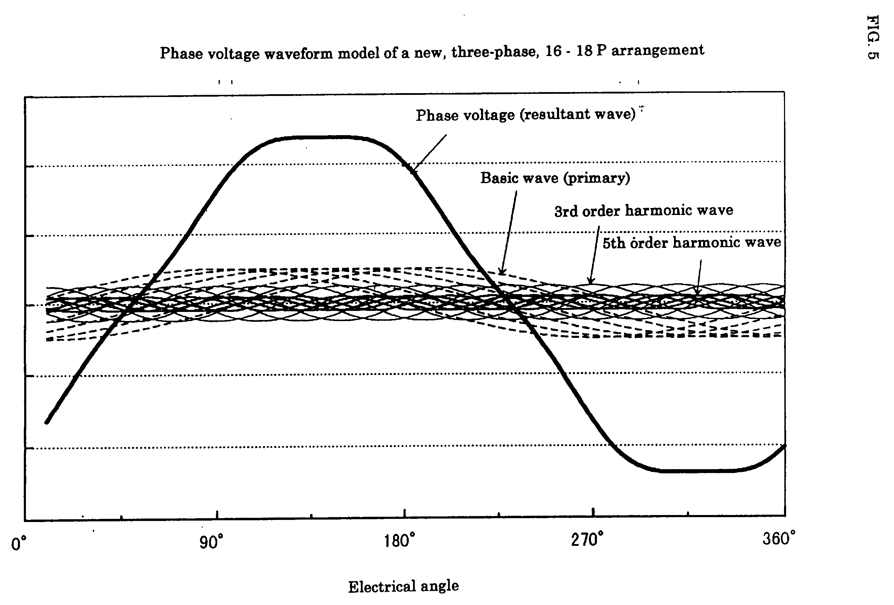

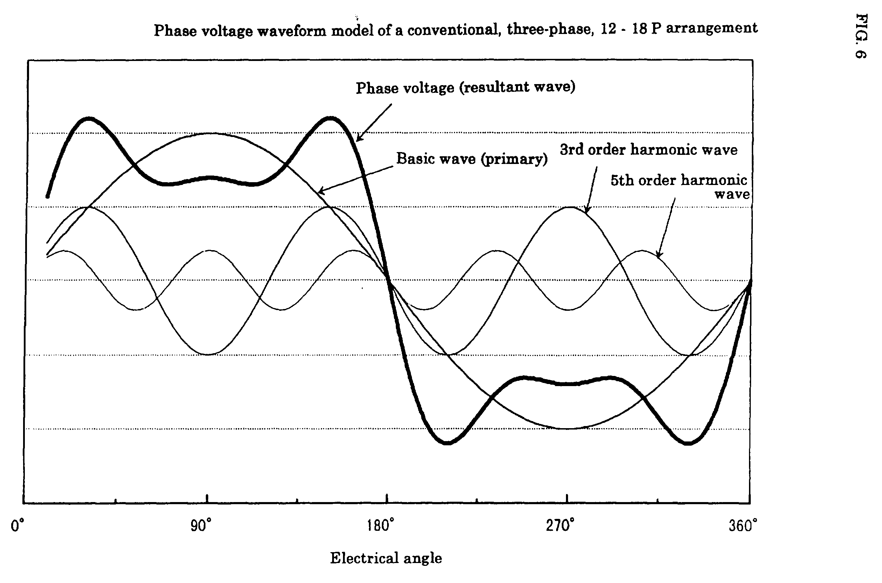

FIGs. 5 and 6 show the phase voltage waveforms obtained by computer simulation analysis. FIG. 5 shows the result obtained with an embodiment of the invention (with 16 poles and 18 teeth) similar to that shown in FIG. 4. FIG. 6 shows the result obtained with a conventional arrangement (with 12 poles and 18 teeth). From these FIGs. 5 and 6, it is understand that this invention can reduce distortion in the resultant waveform by reducing the amplitudes of the basic (primary) wave, third order wave, and fifth order wave.

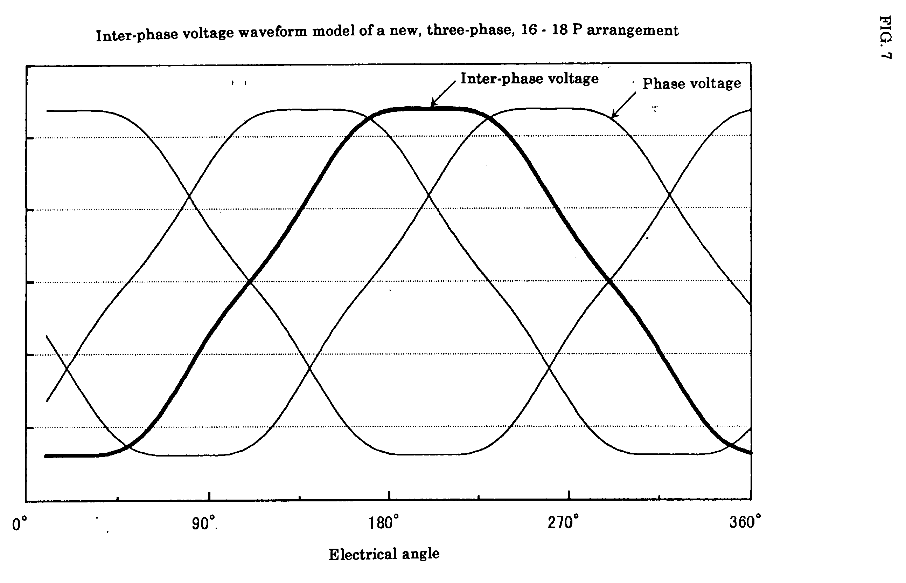

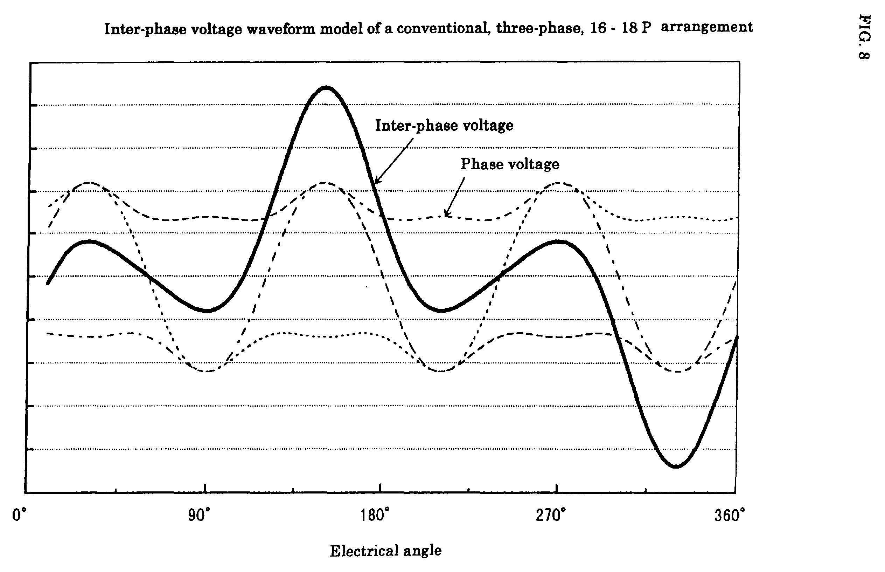

FIGs. 7 and 8 show the inter-phase voltage waveforms obtained by computer simulation analysis. FIG. 7 shows the result obtained from the phase voltage shown in FIG. 5. FIG. 8 shows the result obtained from the phase voltage shown in FIG. 6.

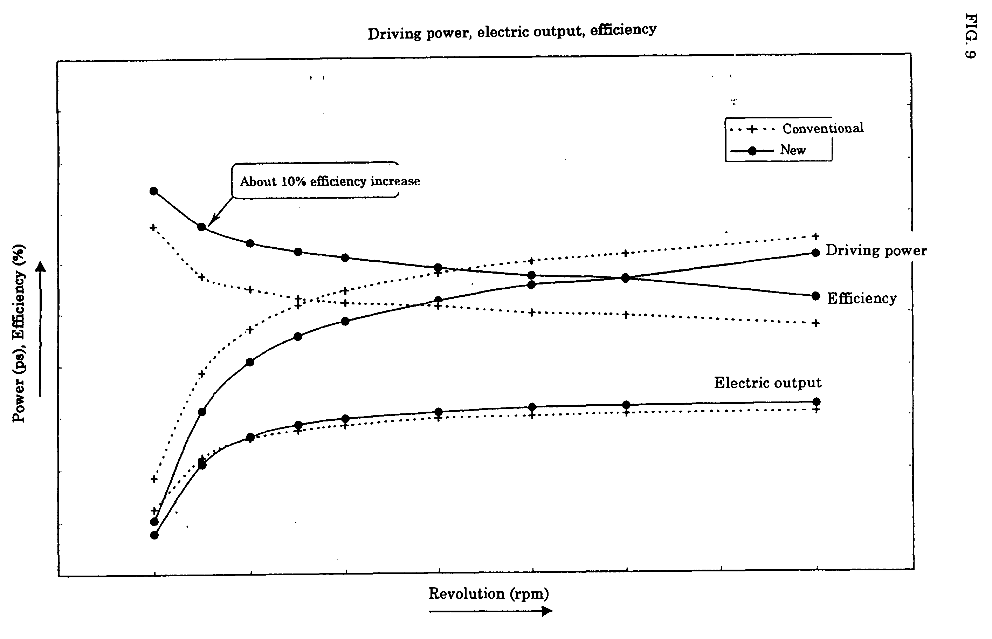

FIG. 9 shows comparison between an embodiment of the invention (with 16 poles and 18 teeth, indicated as New in the figure) and a conventional arrangement (with 12 poles and 18 teeth, indicated as Conventional in the figure) for driving power, electric output, and efficiency. As seen from the figure, the driving power decreases and the efficiency improves about 10 % over the entire range of revolution.

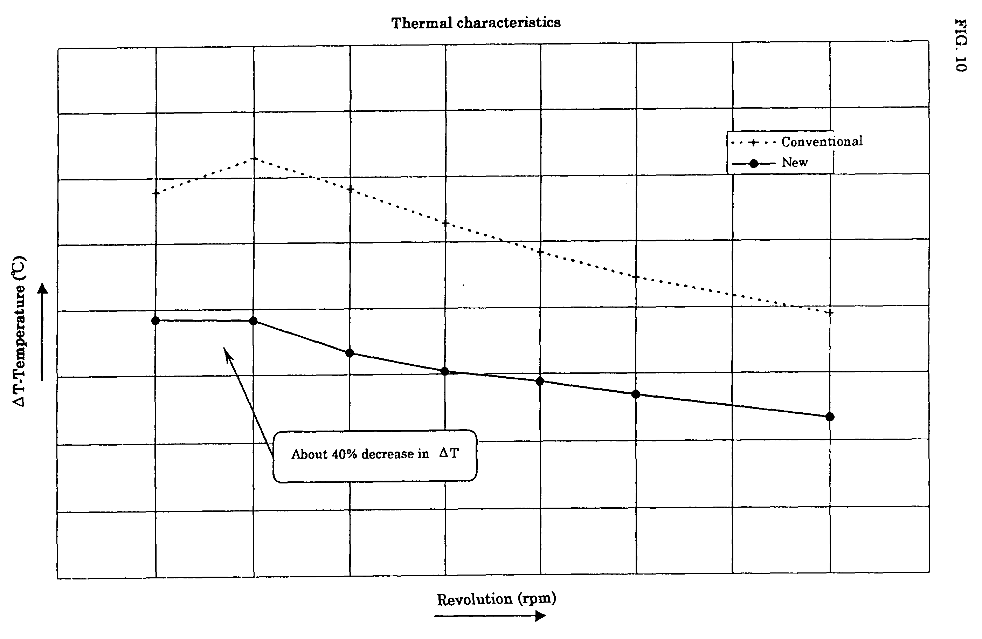

FIG. 10 shows thermal characteristics. In the figure, differential temperature $\Delta T$(°C) between the stator coil and the stator holder 50 (See FIG. 1) for securing the stator is plotted against the revolution (rpm). As seen from the, figure, this invention reduces the coil temperature, by a large margin in comparison with the conventional arrangement, about 40 % over the entire revolution range. As a result, room is provided to reduce the size of the stator and rotor by making the stator coil more compact, or from the viewpoint of the generator size, it is possible to provide more power with the same size of the generator.

Other Embodiments

While the above embodiment uses the neodymium - iron -boron magnet for the permanent magnet 16, this invention also includes arrangement using other permanent magnets such as those using rare-earth and ferrite. Moreover, while the above embodiment is of the outer rotor type with the rotor rotating outside the stator, the invention also includes a inner rotor type in which a rotor rotates radially inside an annular stator.

Effects of the Invention

As described above, the invention of claim 1 is arranged that 2n/m is not an integer where 2n is assumed as the number of permanent magnetic poles and 3m as the number of teeth of the stator, and that induced voltages of a plural number of teeth constituting the same phase of voltages are in the same polarity and in displaced phases. Therefore, rotor driving torque can be reduced. This in turn makes it possible to reduce the minimum torque required of the driving engine and to reduce the size of the engine.

It is also possible to improve generation efficiency by smoothing the output waveform by superimposing the induced voltages of a plural number of teeth with slight phase displacement from one voltage to another, thereby mutually offsetting harmonic losses (losses of the third, fifth, and seventh order harmonics). The increase in the generation efficiency makes it possible to reduce driving power, or in turn, to increase output power obtained with the same engine.

Since heat generation and surplus power generation are reduced with the improvement in the generation efficiency, it is possible to use a thicker wire for the coils with reduced number of coil turns, and to reduce the copper loss, which in turn reduces the heat generation. As a result, it is possible to reduce the size of the generator or to generate greater power with the same size. Moreover, since the output waveforms of respective voltages are smooth like sine waves, the peak voltage value of the waveform becomes smaller, so that a smoothing capacitor of a smaller withstand voltage can be used, which makes it possible to use a smaller, less expensive capacitor.

The effect of the invention gets specially greater when the neodymium-iron-boron magnet is used because the magnet has greater maximum energy product (Claim 2). The coils in the same phase may be wound in succession on successive in teeth so that the polarities of the voltages induced at respective teeth are the same each other (Claim 3). In that case, if it is arranged that the integrated value $\Theta = \Delta \theta \cdot (m - 1)$ of the difference $\Delta \theta | \theta_1 - \theta_2 |$ between the pitch angle $\theta_1 = 2\pi/2n$ of the magnets and the pitch angle $\theta_2 = 2\pi/3m$ of the teeth does not exceed a half (1/2) of the pitch angle $\theta_1$ of the magnets, it is possible to increase the output voltages of respective phases by maintaining sufficiently great voltages induced at respective teeth, and to obtain smooth, favorable output waveforms (Claim 4). Such an arrangement is suitable when the number of teeth 3m is odd (Claim 5).

When the number of teeth 3m is even, the teeth on which coils of the same phase are wound may be divided into two sets, with each set consisting of 3m/2 teeth. When the number of teeth 3m is a multiple of 9 ($3 \times 3 \times s$), the teeth of the same phase may be divided into s sets (Claims 6 and 8). Also in the above cases, it is preferable to arrange that the phase difference $\Theta$ produced between a set of teeth and magnets, namely the (m/2 — 1) multiple or (m/3 — 1) multiple of the difference $\Delta\theta$ between the pitch angle $\theta_1$ of the magnet and the pitch angle $\theta_2$ of the teeth does not exceed $\pi/2n$ (Claim 7).

A three-phase magnetogenerator driven with an internal combustion engine for enabling to reduce the size of a driving engine by reducing driving torque, to improve generation efficiency by smoothing output voltage waveform, to reduce the size or increase the output of the generator by making coils compact by reducing the amount of self-generation, and to reduce size and cost of a smoothing capacitor by reducing peak voltage.

The number of teeth widing generation coils is set as 3m (m being a positive integer) and the number of poles of a permanent magnet secured to a rotor is set as 2n (n being a positive integer), so that 2n/m is not an integer. It is arranged that voltages induced at a plural number of teeth constituting the same phase voltages are of the same polarity and in displaced phases. A neodymium-iron-boron magnet is preferable for the permanent magnet secured to the rotor. When the number of teeth is 3m, the coils of the same phase are wound in succession about m teeth located in succession in the stator circumference direction with their winding direction being reversed alternately to correspond to changes in the polarities of the permanent magnet, so that the polarities of the voltages induced in respective coils are the same each other.

## Claims

1. A three-phase magnetogenerator driven with an internal combustion engine, characterized in that the number of teeth winding generating coils is set as 3m (m being a positive integer) and the number of magnetic poles of permanent magnets secured to a rotor is set as 2n (n being a positive integer), so that 2n/m is not an integer, and that voltages induced at a plural number of teeth constituting the same phase voltage are of the same polarity and in displaced phases.

2. A three-phase magnetogenerator of claim 1, characterized in that the permanent magnet secured to the rotor is a neodymium-iron-boron magnets.

3. A three-phase magnetogenerator of claim 1, 2, or 3, characterized in that the same phase coils are wound on m teeth disposed in succession in the direction of stator circumference with their winding directions reversed and corresponding to changes in the polarity of the permanent magnets opposing respective teeth.

4. A three-phase magnetogenerator of claim 1, characterized in that the number of magnetic poles 2n and the number of teeth 3m are set so that $| 2\pi/2n - 2\pi/3m | \times (m - 1)$ does not exceed $\pi/2n$.

5. A three-phase magnetogenerator of claim 3 or 4, characterized in that the number of teeth 3m is an odd number.

6. A three-phase magnetogenerator of claim 1, 2, or 3, characterized in that the number of teeth is an even number, and that the coils in the same phase are wound in succession on m/2 teeth arranged in succession in the direction of stator circumference and on m/2 teeth located symmetrically with their winding directions reversed to correspond to changes in polarity of the permanent magnets opposing respective teeth.

7. A three-phase magnetogenerator of claim 6, characterized in that the number of magnetic poles 2n and the number of teeth 3m are set so that $| 2 \pi /2n — 2 \pi /3m | \times (m — 1)$ does not exceed $\pi /2n$.

8. A three-phase magnetogenerator of claim 1, 2, or 3, characterized in that the number of teeth is a multiple of 9, or $3 \times 3 \times s$, and that the coils in the same phase are wound in succession on m/s teeth equally devided by S in succession in the direction of stator circumference and located symmetrically with their winding directions reversed to correspond to changes in the polarity of the permanent magnets opposing respective teeth.

EP 1 091 476 A2

FIG. 1

Stator

7

FIG. 2

$2n = 16$
$3m = 15$

$0°$
$24° = \theta_2$
$22.5° = \theta_1$
15 teeth

Magnet of 16 poles

$\Delta\theta$

$1.5°$

16

Coil (U-phase)

16

$3°$

10

14

24

$4.5°$

12

20

$6°$

24

$\Theta = \Delta\theta \cdot (m-1)$
$(< \theta_{1/2})$

52

52

22

EP 1 091 476 A2

8

FIG. 3

$2n = 16$
$3m = 18$

0°
20° $= \theta_2$
22. 5° $= \theta_1$

18 teeth
Magnet of 16 poles

$\Delta \theta$

2. 5°

5°  $\Theta = \Delta \theta \cdot (m/2 - 1)$

Coil (U-phase)

51

12

20

10

14

16

16

22

5°

2. 5°

24  0°  24

EP 1 091 476 A2

9

FIG. 4

(A) Output waveform according to the present invention

(B) Output waveform with the conventional arrangement

(C) Circuit diagram

FIG. 5

Phase voltage waveform model of a new, three-phase, 16 - 18 P arrangement

Phase voltage (resultant wave)

Basic wave (primary)

3rd order harmonic wave

5th order harmonic wave

0°  90°  180°  270°  360°

Electrical angle

EP 1 091 476 A2

FIG. 6

Phase voltage waveform model of a conventional, three-phase, 12 - 18 P arrangement

Phase voltage (resultant wave)

Basic wave (primary)

3rd order harmonic wave

5th order harmonic wave

Electrical angle

Inter-phase voltage waveform model of a new, three-phase, 16 - 18 P arrangement

FIG. 7

EP 1 091 476 A2

FIG. 8

EP 1 091 476 A2

Inter-phase voltage waveform model of a conventional, three-phase, 16 - 18 P  arrangement

Inter-phase voltage

Phase voltage

0°        90°        180°        270°        360°

Electrical angle

FIG. 9

FIG. 10

Thermal characteristics

Conventional
New

About 40% decrease in ΔT

Revolution (rpm)

ΔT-Temperature (℃)

FIG. 11

（A）

0°

14

10

22

24

60°

18 teeth
Magnet of 12 poles
θ

16

30°

24

0°

12

20

0°

0°

Coil (U-phase)

24

0°

0°

24

（B）

16

12

20

22

24

14

10